# EUROPEAN PATENT SPECIFICATION

(11) **EP 2 596 699 B1**
(45) Date of publication and mention of the grant of the patent: **02.07.2014**
(21) Application number: 11009268.1
(22) Date of filing: 22.11.2011
(51) Int. Cl.: A01G 3/08, B27B 17/00

(54) **Apparatus for tree pruning**
Vorrichtung zur Baumschneidung
Appareil pour ébrancher les arbres

(43) Date of publication of application: 29.05.2013
(73) Proprietor: Yamabiko Corporation, Ohme-shi, Tokyo 198-8760 (JP)
(72) Inventor: Nagaishi, Hideki, Tokyo 205-0001 (JP); Kano, Yoshiaki, Tokyo 190-0033 (JP); Ito, Taku, Tokyo 205-0001 (JP); Hayashi, Syungo, Tokyo 205-0001 (JP)
(74) Representative: Gleiss, Alf-Olav

(56) References cited:
- DE-A1- 10 035 832
- DE-U1- 29 816 909
- US-A- 2 642 901
- US-A- 2 925 105
- US-A- 5 669 145
- US-A- 5 671 537
- US-A- 5 878 499
- US-A1- 2007 271 798
- US-B1- 6 536 119

## Description

### BACKGROUND OF THE INVENTION

### Field of the Invention

The present invention relates to an apparatus for tree pruning capable of efficiently cutting large branches and small branches at high positions of trees, as well as hedges, and particularly to an apparatus for tree pruning of a type in which branch-receiving members are mounted on a guide bar in order to prevent small branches to be cut from being repelled by a saw chain.

### Description of the Related Art

Conventionally, powered pruners and general-purpose chain saws have generally been used to cut large branches (tree branches having diameters of approximately 10 mm or more). However, it is difficult to efficiently cut small branches having diameters smaller than about 10 mm with the powered pruners or general-purpose chain saws, because the small branches are repelled by saw chains.

In this respect, in order to efficiently cut small branches, chain saws for pruning of a type in which a branch-receiving member for receiving a small branch to prevent the small branch from being repelled by the saw chain is mounted on a guide bar has conventionally been proposed as shown in the following Patent Documents 1, 2, and 3, and the like.

As shown in Patent Document 1, the branch-receiving member has an attachment base portion attached to a side surface of a guide bar and branch-receiving projection portions which are continuous to the attachment base portion and which project above and below the guide bar. To avoid interference with the saw chain, the branch-receiving projection portions are provided continuously to the attachment base portion through outward bending portions.

Patent Document 2 discloses a chain saw having tapered branch-receiving projection portions.

Patent Document 3 discloses that the branch-receiving members are inclined in the direction of rotation of the saw chain.
Patent Document 1: United States Patent No. 5878499
Patent Document 2: United States Patent No. 2642901
Patent Document 3: United States Patent No. 2925105

### SUMMARY OF THE INVENTION

The conventional chain saws for pruning (DE A 100 35 832, DE U 298 16 909) have improved performance in cutting small branches owing to the provision of the branch-receiving members to the guide bar. However, the improvement is still insufficient. In particular, branch clogging and catching of the branch-receiving members occur not a few times in operations in which an operator on the ground prunes branches at high positions of a tree, i.e., in operations of pruning branches far away from the operator, so that the pruning operation is often difficult.

The present invention has been made in view of the above-described problem, and an object of the present invention is to provide an apparatus for tree pruning capable of efficiently cutting not only large branches, but also small branches without aid of any other apparatus, and effectively reducing unpruned branches as well as branch clogging and catching of the branch-receiving members, so that the workability of pruning trees at high positions can be improved.

In order to achieve the above object, an apparatus for tree pruning of the present invention basically comprises: a plate-shaped guide bar; an endless circular saw chain set around the guide bar and configured to be rotated; and a plurality of branch-receiving members mounted on side surfaces of the guide bar at predetermined intervals in a longitudinal direction of the guide bar and configured to prevent a small branch to be cut from being repelled by the saw chain, wherein the branch-receiving members each have an attachment base portion attached to a side surface of the guide bar and branch-receiving projection portions which are continuous to the attachment base portion through an outward bending portion and which project above and below the guide bar, the branch-receiving members are mounted on both left and right side surfaces of the guide bar, such that the branch-receiving projection portions face each other across the saw chain, wherein projecting heights of the branch-receiving members, from the guide bar, of the branch-receiving projection portions of the branch-receiving members in a left and right pair are different from each other and wherein the branch-receiving projection portions of the branch-receiving members mounted to one side surface of the guide bar are alternately high and low in the longitudinal direction of the guide bar.

Preferably, in each of the branch-receiving members viewed in a direction of rotation of the saw chain, the branch-receiving projection portion has a rear end surface portion which is linear and inclined rearward, and a front end surface portion which is shaped into an arc in order to reduce incidence of catching of a branch.

In another preferred embodiment, rear end surface portions of the branch-receiving projection portions of the branch-receiving members in a left and right pair are placed at the same position in a direction of rotation of the saw chain.

In another preferred embodiment, the branch-receiving members are detachably mounted on the guide bar, and pitch intervals of the branch-receiving members in the longitudinal direction of the guide bar are optionally changeable.

In the apparatus for tree pruning according to the present invention, the rear end surface portions of the branch-receiving projection portions arranged to face each other are configured to receive both sides of a potion of a small branch to be cut, and the rear end surface portions are inclined rearward. Hence, the ability to hold the small branch is improved, so that the small branch is less likely to be repelled.

In addition, one of the projecting heights, from the guide bar, of the branch-receiving projection portions of the branch-receiving members in the left and right pair arranged to face each other is higher than the other one of the projecting heights. Hence, it is possible to effectively reduce unpruned branches as well as branch clogging and catching of the branch-receiving members, so that the workability of pruning can be improved.

In addition, the branch-receiving projection portions of the branch-receiving members mounted on one side surface (the other side surface) of the guide bar are alternately high and low in the longitudinal direction of the guide bar. This also makes it possible to further reduce branch clogging and catching of the branch-receiving members.

Moreover, the positions of attachment of the branch-receiving members, i.e., pitch intervals of the branch-receiving members in the longitudinal direction of the guide bar, are optionally changeable. This also makes it possible to further improve the workability of pruning.

### BRIEF DESCRIPTION OF THE DRAWINGS

Fig. 1 is a view showing how a pruning operation is performed by using one embodiment of an apparatus for tree pruning according to the present invention.
Figs. 2A and 2B are respectively a side view and a plan view showing the embodiment of the apparatus for tree pruning according to the present invention.
Figs. 3A to 3D are four-side views showing a guide bar and branch-receiving members attached thereto of the embodiment, wherein Figures 3C and 3D do not form part of the invention but represent background art useful for understanding the invention.
Figs. 4A and 4B are perspective views of the guide bar and the branch-receiving members attached thereto of the embodiment, viewed from above and behind, and viewed from below and in front, respectively.

### DESCRIPTION OF THE PREFERRED EMBODIMENTS

Hereinafter, an embodiment of the present invention is described in detail with reference to the attached drawings.

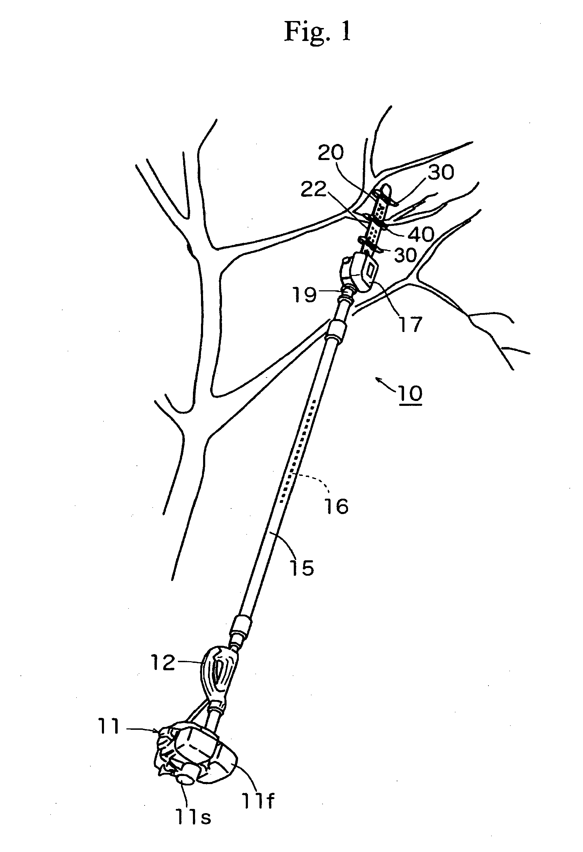

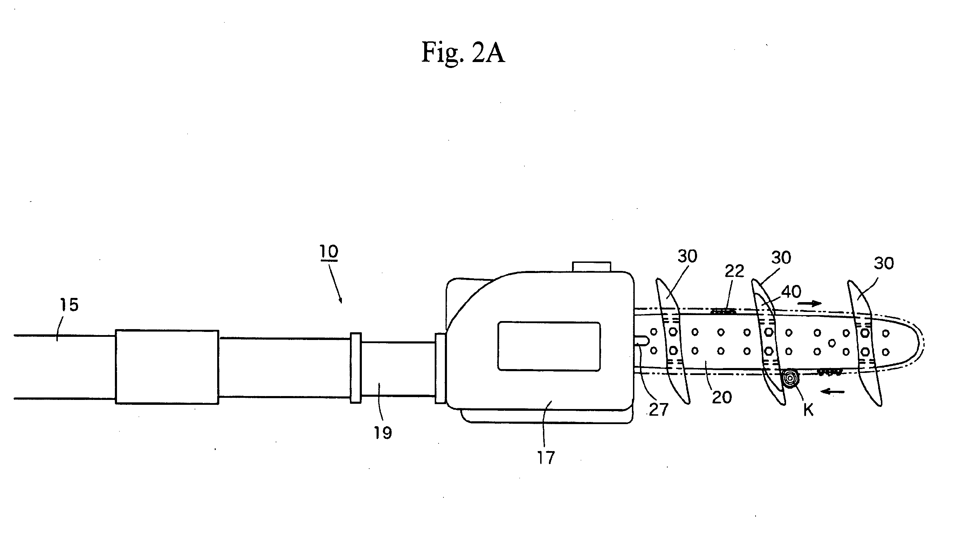

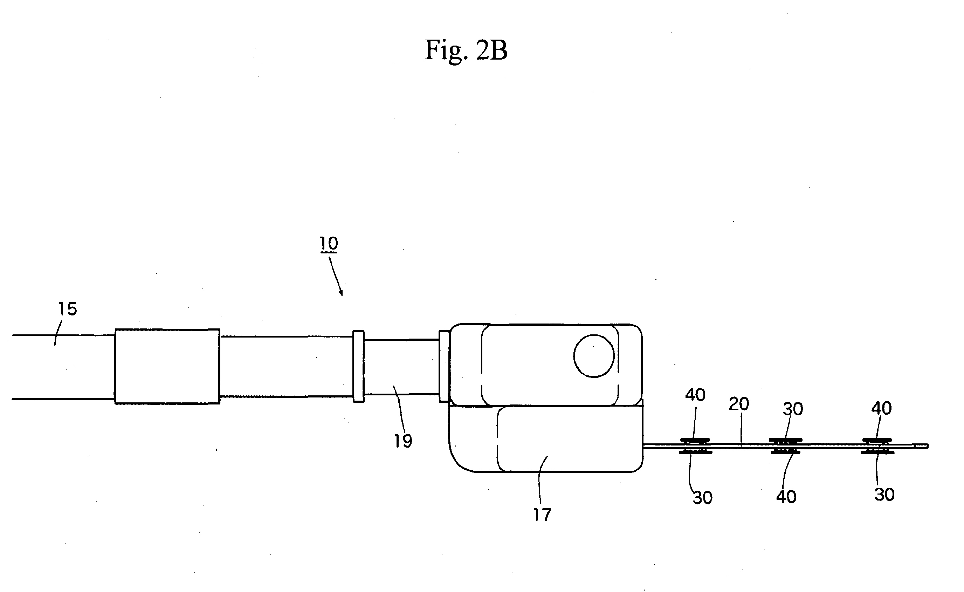

Fig. 1 is a view showing how a pruning operation is performed by using one embodiment of an apparatus for tree pruning according to the present invention. Figs. 2A and 2B are respectively a side view and a plan view showing the embodiment of the apparatus for tree pruning according to the present invention.

The apparatus for tree pruning 10 shown in Fig. 1 has an operation rod 15 in which a transmission shaft 16 is inserted. A transmission box 17 is connected to a front end of the operation rod 15 with a connection joint 19. The transmission box 17 houses a gear train and a sprocket wheel. A plate-shaped guide bar 20 projecting frontward is provided at a right-front end portion of the transmission box 17. An endless circular saw chain 22 is set around the guide bar 20 and the sprocket wheel in the transmission box 17.

A small air-cooled two-stroke gasoline engine 11 is attached to a rear end of the operation rod 15. The gasoline engine 11 is a motor for rotating the saw chain 22 by means of the transmission shaft 16 and the transmission box 17. A recoil starter 11s and a fuel tank 11f are provided to the gasoline engine 11.

A semi-circular ring handle 12 having a grip is provided in the vicinity of the rear end of the operation rod 15. The handle 12 is used to swing a guide bar 20 portion, around which the saw chain 22 is set, upward, downward, leftward, rightward, frontward, and rearward (in general, the handle 12 is gripped by the right hand and a lower portion of the operation rod 15 above the handle 12 is gripped by the left hand).

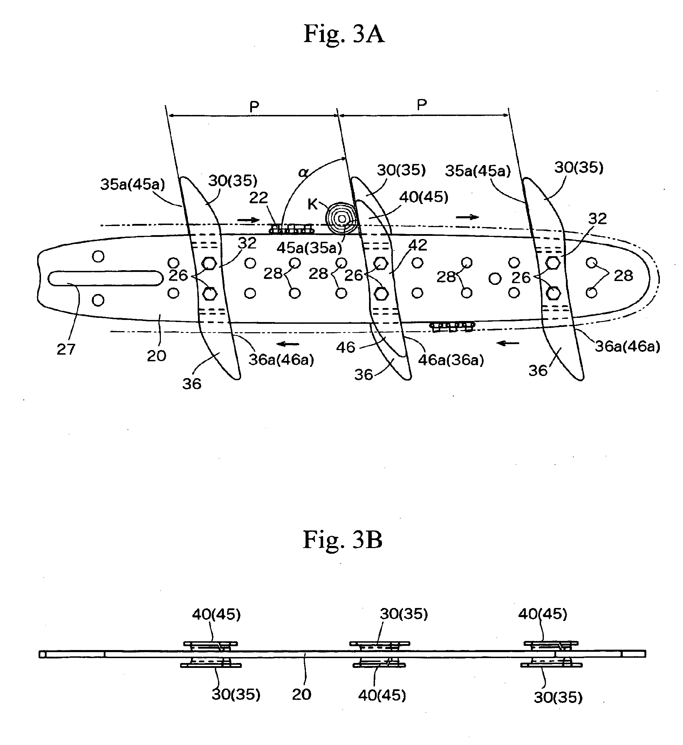

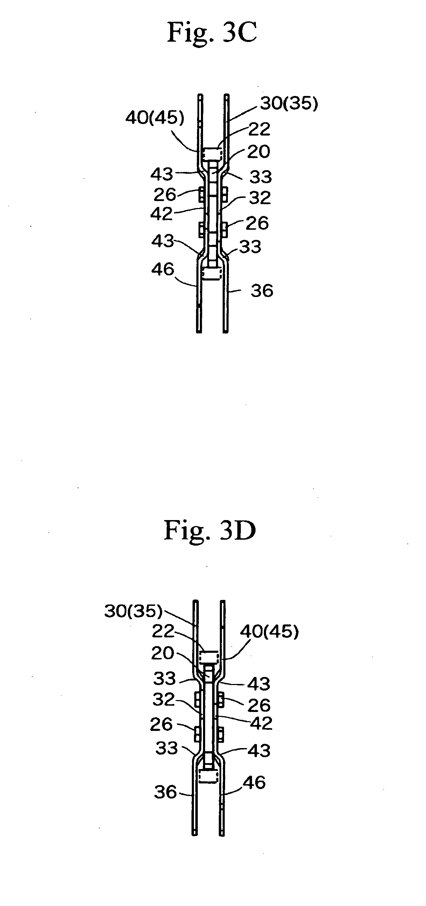

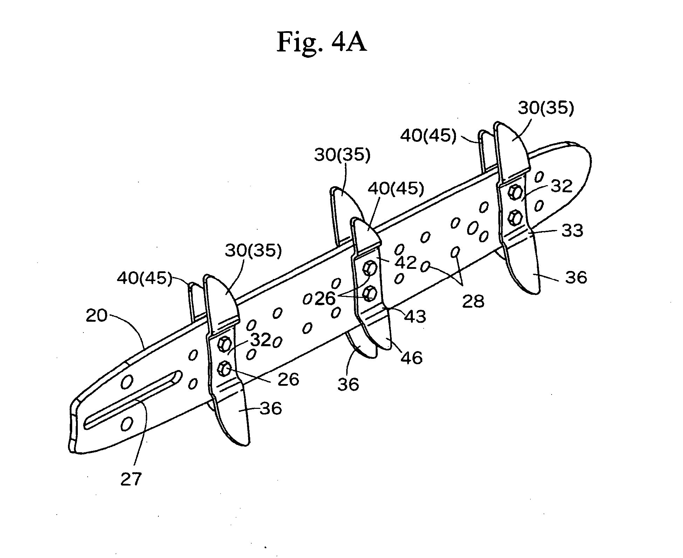

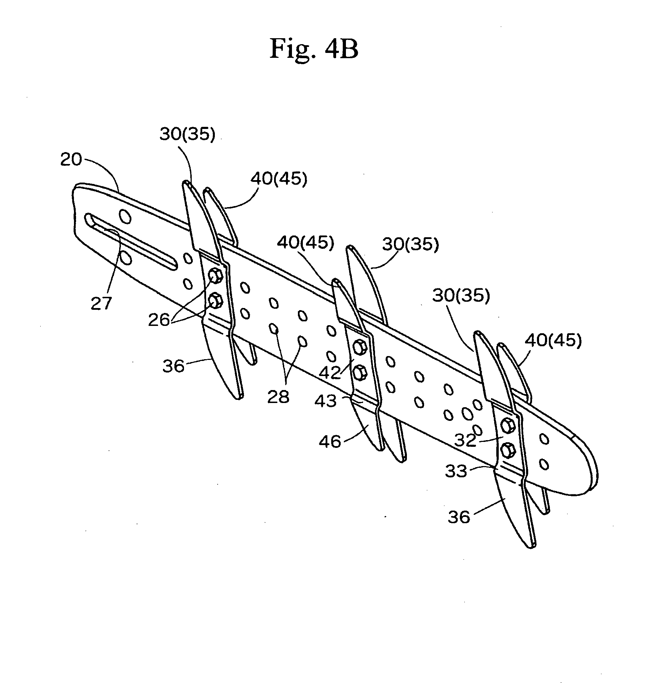

In this embodiment, as can be seen from Figs. 3A to 3D, 4A and 4B which specifically show branch-receiving members 30 and 40 together with the guide bar 20 and the saw chain 22, the branch-receiving members 30 and 40 are mounted on one side surface and the other side surface of the guide bar 20 at predetermined intervals (pitch intervals P) in a longitudinal direction of the guide bar 20 in order to prevent a small branch to be cut from being repelled by the saw chain 22. The branch-receiving members can be classified into two kinds, namely, high projecting branch-receiving members 30 and low projecting branch-receiving members 40. Note that a long hole 27 used for attachment of the guide bar 20 to the transmission box 17 is provided in the vicinity of the rear end of the guide bar 20.

Each of the high projecting branch-receiving members 30 has an attachment base portion 32 attached to a side surface of the guide bar 20, and branch-receiving projection portions 35 and 36 which are continuous to the attachment base portion 32 through outward bending portions 33, and which project above and below the guide bar 20, respectively.

The low projecting branch-receiving members 40 have a similar shape to that of the high projecting branch-receiving members 30, but have a smaller length than the high projecting branch-receiving members 30. Each of the low projecting branch-receiving members 40 has an attachment base portion 42 attached to a side surface of the guide bar 20, and branch-receiving projection portions 45 and 46 which are continuous to the attachment base portion 42 through outward bending portions 43, and which project above and below the guide bar 20, respectively (the branch-receiving projection portions 45 and 46 have a smaller projecting height than the branch-receiving projection portions 35 and 36 of the high projecting branch-receiving members 30).

In the branch-receiving members 30 and 40, rear end surface portions 35a, 36a, 45a, and 46a of the branch-receiving projection portions 35, 36, 45, and 46 are each linear and inclined rearward with respect to a direction of rotation of the saw chain (a rearward inclination angle is shown by α in Fig. 3A), and front end surface portions of the branch-receiving projection portions 35, 36, 45, and 46 are each shaped into an arc in order to reduce incidence of catching of a branch. It has been found out from experimental manufacture and the like that the optimum rearward inclination angle α is approximately 80°.

Moreover, a high projecting branch-receiving member 30 on one side surface of the guide bar 20 and a low projecting branch-receiving member 40 on the other side surface thereof are fixed together by being fastened with two upper and lower bolts and the like 26 such that the branch-receiving projection portions 35 and 45 face each other and the branch-receiving projection portions 36 and 46 face each other across the saw chain 22. Regarding the branch-receiving members 30 and 40 in each left and right pair, projecting heights, from the guide bar 20, of the branch-receiving projection portions 35 and 45 are different from each other, and projecting heights, from the guide bar 20, of the branch-receiving projection portions 36 and 46 are different from each other.

In addition, in the branch-receiving members 30 and 40 in each left and right pair, the rear end surface portions 35a and 45a of the branch-receiving projection portions 35 and 45 are placed at the same position and the rear end surface portions 36a and 46a of the branch-receiving projection portions 36 and 46 are placed at the same position with respect to the direction of rotation of the saw chain 22.

Here, a high projecting branch-receiving member 30, a low projecting branch-receiving member 40, and a high projecting branch-receiving member 30 are arranged on one side surface of the guide bar 20 in this order in the longitudinal direction of the guide bar 20. Meanwhile, a low projecting branch-receiving member 40, a high projecting branch-receiving member 30, and a low projecting branch-receiving member 40 are arranged on the other side surface of the guide bar 20, i.e., on the opposite side from the high projecting branch-receiving member 30, the low projecting branch-receiving member 40, and the high projecting branch-receiving member 30. In other words, the branch-receiving projection portions of the branch-receiving members mounted on one side surface (another side surface) of the guide bar 20 are alternately high and low in a longitudinal direction of the guide bar 20.

When pruning operation is conducted by employing such a configuration, the saw chain 22 is rotated by driving the engine 11, and a small branch K to be cut is received by the rear end surface portions 35a and 45a or 36a and 46a of the branch-receiving projection portions 35 and 45 or 36 and 46, so that the small branch K can be cut (see Fig. 2A and 3A). In this case, the rear end surface portions 35a and 45a or 36a and 46a of the branch-receiving projection portions 35 and 45 or 36 and 46 arranged to face each other are configured to receive both sides of a potion of a small branch K to be cut, and the rear end surface portions 35a and 45a or 36a and 46a are inclined rearward. Hence, the ability to hold the small branch K is improved, so that the small branch K is less likely to be repelled.

In addition, pairs of upper and lower bolt-and-the-like through holes 28 are provided in the guide bar 20 at predetermined intervals in the longitudinal direction of the guide bar 20. The through holes 28 are used for attaching the branch-receiving members 30 and 40 detachably from the guide bar 20. Accordingly, the positions of attachment of the branch-receiving members 30 and 40, i.e., the pitch intervals P of the branch-receiving members 30 and 40 in the longitudinal direction of the guide bar 20 are optionally changeable.

As described above, in the apparatus for tree pruning 10 of this embodiment, the branch-receiving members 30 and 40 are arranged to face each other on both side surfaces of the guide bar 20. In addition, in the branch-receiving members 30 and 40 in each left and right pair arranged to face each other, one of the projecting heights, from the guide bar 20, of the branch-receiving projection portions 35 and 45 is higher than the other one of the projecting heights, and one of the projecting heights, from the guide bar 20, of the branch-receiving projection portions 36 and 46 is higher than the other one of the projecting heights. Hence, it is possible to effectively reduce unpruned branches as well as branch clogging and catching of the branch-receiving members 30 and 40, so that the workability of pruning can be improved.

In addition, regarding the branch-receiving members 30 and 40 mounted on one side surface (the other side surface) of the guide bar 20, the branch-receiving projection portions 35 and 45 are alternately high and low and the branch-receiving projection portions 36 and 46 are alternately high and low in the longitudinal direction of the guide bar 20. This also makes it possible to further reduce unpruned branches as well as branch clogging and catching of the branch-receiving members 30 and 40.

Moreover, the positions of attachment of the branch-receiving members 30 and 40, i.e., pitch intervals P of the branch-receiving members 30 and 40 in the longitudinal direction of the guide bar 20, are optionally changeable. This also makes it possible to further improve the workability of pruning.

### Explanation of Reference Numerals

10 ... apparatus for tree pruning, 11 ... small air-cooled two-stroke gasoline engine (motor), 15 ... operation rod, 17 ... transmission box, 20 ... guide bar, 22 ... saw chain, 26 ... bolt and the like, 28 ... through hole, 30 ... high projecting branch-receiving member, 32 ... attachment base portion, 35 and 36 ... branch-receiving projection portion, 40 ... low projecting branch-receiving member, 42 ... attachment base portion, 45 and 46 ... branch-receiving projection portion.

## Claims

1. An apparatus for tree pruning (10), comprising:
a plate-shaped guide bar (20);
an endless circular saw chain (22) set around the guide bar (20) and configured to be rotated; and
a plurality of branch-receiving members (30;40) mounted on side surfaces of the guide bar (20) at predetermined intervals (P) in a longitudinal direction of the guide bar (20) and configured to prevent a small branch to be cut from being repelled by the saw chain (22), wherein
the branch-receiving members (30;40) each have an attachment base portion (32; 42) attached to a side surface of the guide bar (20) and branch-receiving projection portions (35,36;45,46) which are continuous to the attachment base portion (32;42) through an outward bending portion and which project above and below the guide bar (20),
the branch-receiving members (30;40) are mounted on both left and right side surfaces of the guide bar (20), such that the branch-receiving projection portions (35,36;45,46) face each other across the saw chain (22), **characterized in that**
projecting heights of the branch-receiving members (30;40), from the guide bar, of the branch-receiving projection portions of the branch-receiving members in a left and right pair are different from each other, and that
the branch-receiving projection portions (35,36;45,46) of the branch-receiving members (30,40) mounted on one side surface of the guide bar (20) are alternately high and low in the longitudinal direction of the guide bar (20).

2. The apparatus for tree pruning according to claim 1, wherein
in each of the branch-receiving members (30,40) viewed in a direction of rotation of the saw chain (22), the branch-receiving projection portion (35,36;45,46) has a rear end surface portion which is linear and inclined rearward, and a front end surface portion which is shaped into an arc in order to reduce incidence of catching of a branch (K) .

3. The apparatus for tree pruning according to claim 1, wherein
rear end surface portions of the branch-receiving projection portions (35,36;45,46) of the branch-receiving members (30,40) in a left and right pair are placed at the same position in a direction of rotation of the saw chain (22).

4. The apparatus for tree pruning according to claim 1, wherein
the branch-receiving members (30,40) are detachably mounted on the guide bar (20), and
pitch intervals of the branch-receiving members (30,40) in the longitudinal direction of the guide bar (20) are optionally changeable.

## Patentansprüche

1. Vorrichtung zum Baumschneiden (10), die Folgendes aufweist:
eine plattenförmige Führungsstange (20);
eine endlose Kreissägenkette (22), die rund um die Führungsstange (20) herumgelegt und ausgestaltet ist, um gedreht zu werden; und
eine Vielzahl von astaufnehmenden Elementen (30;40), die auf Seitenflächen der Führungsstange (20) in zuvor festgelegten Abständen auf der Führungsstange (20) in einer Längsrichtung der Führungsstange (20) angebracht und so ausgestaltet sind, dass sie das Zurückstoßen eines abzuschneidenden kleinen Astes durch die Sägekette (22) verhindern, wobei
an den astaufnehmenden Elementen (30;40) jeweils einen Befestigungsbasisabschnitt (32; 42) aufweisen, der an einer Seitenfläche der Führungsstange (20) befestigt ist, und astaufnehmende Vorsprungabschnitte (35,36;45,46), die zu dem Befestigungsbasisabschnitt (32;42) über einen nach außen gebogenen Abschnitt durchgängig sind, und die oberhalb und unterhalb der Führungsstange (20) hervorstehen,
die astaufnehmenden Elemente (30;40) auf beiden, den linken und rechten Seitenflächen der Führungsstange (20) derart angebracht sind, dass die astaufnehmenden Vorsprungabschnitte (35,36;45,46) einander bezüglich der Sägekette (22) zugewandt sind,
**dadurch gekennzeichnet, dass**
sich von der Führungsstange ausgehende Höhen der astaufnehmenden Elemente (30;40), der astaufnehmenden Vorsprungabschnitte der astaufnehmenden Elemente in einem linken und rechten Paar voneinander unterscheiden, und dass
die astaufnehmenden Vorsprungabschnitte (35,36;45,46) der auf einer Seitenfläche der Führungsstange angebrachten astaufnehmenden Elemente (30,40) in Längsrichtung der Führungsstange (20) wechselweise hoch und niedrig sind.

2. Vorrichtung zum Baumschneiden nach Anspruch 1, wobei in jedem der astaufnehmenden Elemente (30;40) in einer Drehrichtung der Sägekette (22) gesehen der astaufnehmende Vorsprungsabschnitt (35,36;45,46) einen hinteren Endflächenabschnitt aufweist, der linear und nach hinten geneigt ist, und einen vorderen Endflächenabschnitt, der bogenförmig ausgebildet ist, um Vorkommnisse des Verfangens eines Astes (K) zu verringern.

3. Vorrichtung zum Baumschneiden nach Anspruch 1, wobei hintere Endflächenabschnitte der astaufnehmenden Vorsprungsabschnitte (35,36;45,46) der astaufnehmenden Elemente (30;40) in einem linken und rechten Paar in einer Drehrichtung der Sägekette (22) in der gleichen Position angeordnet sind.

4. Vorrichtung zum Baumschneiden nach Anspruch 1, wobei die astaufnehmenden Elemente (30;40) entfernbar auf der Führungsstange (20) angebracht sind, und
die Abstandsintervalle der astaufnehmenden Elemente (30;40) in Längsrichtung der Führungsstange (20) optional änderbar sind.

## Revendications

1. Appareil d'élagage d'arbre (10) comprenant :
une barre de guidage en forme de plaque (20) ;
une chaîne de scie circulaire sans fin (22) établie autour de la barre de guidage (20) et configurée pour être tournée ; et
une pluralité d'éléments de réception de branche (30 ; 40) montés sur des surfaces latérales de la barre de guidage (20) à des intervalles prédéterminés (P) dans une direction longitudinale de la barre de guidage (20) et configurés pour empêcher une petite branche devant être coupée d'être repoussée par la chaîne de scie (22), dans lequel
les éléments de réception de branche (30 ; 40) ont chacun une portion de base de liaison (32 ; 42) reliée à une surface latérale de la barre de guidage (20) et des portions de saillie de réception de branche (35, 36 ; 45, 46) qui sont continues à la portion de base de liaison (32 ; 42) à travers une portion de pliage vers l'extérieur et qui font saillie au-dessus et en dessous de la barre de guidage (20),
les éléments de réception de branche (30 ; 40) sont montés à la fois sur des surfaces latérales gauche et droite de la barre de guidage (20) de sorte que les portions de saillie de réception de branche (35, 36 ; 45, 46) se font face en travers de la chaîne de scie (22),
**caractérisé en ce que**
des hauteurs de saillie des éléments de réception de branche (30 ; 40), depuis la barre de guidage, des portions de saillie de réception de branche des éléments de réception de branche dans une paire gauche et droite sont différentes l'une de l'autre, et que
les portions de saillie de réception de branche (35, 36 ; 45, 46) des éléments de réception de branche (30, 40) montés sur une surface latérale de la barre de guidage (20) sont en alternance hautes et basses dans la direction longitudinale de la barre de guidage (20).

2. Appareil d'élagage d'arbre selon la revendication 1, dans lequel
dans chacun des éléments de réception de branche (30, 40) visualisés dans une direction de rotation de la chaîne de scie (22), la portion de saillie de réception de branche (35, 36 ; 45, 46) a une portion de surface d'extrémité arrière qui est linéaire et inclinée vers l'arrière et une portion de surface d'extrémité avant qui est formée en un arc pour réduire l'incidence d'accrochage d'une branche (K).

3. Appareil d'élagage d'arbre selon la revendication 1, dans lequel
des portions de surface d'extrémité arrière des portions de saillie de réception de branche (35, 36 ; 45, 46) des éléments de réception de branche (30, 40) dans une paire gauche et droite sont placées à la même position dans une direction de rotation de la chaîne de scie (22).

4. Appareil d'élagage d'arbre selon la revendication 1, dans lequel
les éléments de réception de branche (30, 40) sont montés de manière amovible sur la barre de guidage (20), et
des intervalles de pas des éléments de réception de branche (30, 40) dans la direction longitudinale de la barre de guidage (20) sont variables en option.
